Europäisches Patentamt

European Patent Office

Office européen des brevets

(11) Numéro de publication: **0 011 039**
**B1**

(12) **FASCICULE DE BREVET EUROPEEN**

(45) Date de publication du fascicule du brevet: **17.11.82**

(21) Numéro de dépôt: **79400818.5**

(22) Date de dépôt: **02.11.79**

(51) Int. Cl.³: **A 47 C 7/46,** A 47 C 7/02, A 47 C 7/38, B 60 N 1/00

(54) Sièges pour véhicules.

(30) Priorité: **07.11.78 FR 7832059**

(43) Date de publication de la demande:
**14.05.80 Bulletin 80/10**

(45) Mention de la délivrance du brevet:
**17.11.82 Bulletin 82/46**

(84) Etats contractants désignés:
**DE GB IT**

(56) Documents cités:
**DE - B - 1 084 588**
**FR - A - 2 092 725**
**FR - A - 2 093 817**
**US - A - 3 632 170**

(73) Titulaire: **SOCIETE ANONYME AUTOMOBILES CITROEN**
**117 à 167, Quai André Citroen**
**F-75747 Paris Cedex 15 (FR)**
(73) Titulaire: **AUTOMOBILES PEUGEOT**
**75, avenue de la Grande Armée**
**F-75116 Paris (FR)**

(72) Inventeur: **Harmand, Michel**
**3, rue Saint-Exupéry**
**F-92360 Meudon-la-Forêt (FR)**
Inventeur: **de Pauw, Erick Jean-Marie**
**9, la Villeparc**
**F-78310 Elancourt (FR)**

(74) Mandataire: **Boivin, Claude**
**9, rue Edouard-Charton**
**F-78000 Versailles (FR)**

Courier Press, Leamington Spa, England.

## Sièges pour véhicules

La présente invention concerne un siège, notamment pour véhicule, comprenant un support composé d'un support d'assise et d'un support de dossier auxquels sont liés une série d'éléments d'appui constitués par des blocs indépendants et juxtaposés, mous, souples ou élastiques.

Le brevet allemand 1 084 588 décrit un siège de ce genre. Mais, dans ce siège, les différents blocs ont une section approximativement rectangulaire, ce qui ne permet pas une adaptation de la surface d'appui à la morphologie de l'utilisateur.

Le siège selon l'invention, dont le confort est particulièrement grand et qui peut être facilement adapté à la morphologie de l'utilisateur, est caractérisé en ce que les blocs sont alternativement de forme concave et de forme convexe, ces formes étant déterminées de manière que les bords ou zones par lesquels deux éléments adjacents sont en contact présentent des profils complémentaires. Les éléments d'appui peuvent avoir une section transversale circulaire ou non; lorsqu'ils ont une section transversale circulaire, ils peuvent être de révolution ou non, un bord de l'élément ayant, dans ce dernier cas, une concavité ou convexité différente de celle du bord diamètralement opposé. Les éléments de forme concave peuvent, par exemple, être de révolution alors que les éléments de forme convexe ont une section transversale ovale allongée suivant la direction longitudinale du siège; dans ce cas, l'épaisseur des éléments de forme convexe, dans le sens correspondant au petit axe de leur section transversale est avantageusement déterminée de manière que l'élément repose sur le support au moins dans sa partie médiane tout en restant en contact avec les éléments de forme concave adjacents.

Le support sur lequel sont placés les éléments d'appui peut présenter une surface extérieure qui transversalement peut être plane, concave ou convexe.

Si cette surface extérieure est transversalement plane ou concave, il existe un vide entre elle et la partie médiane des blocs de forme concave, de sorte que le siège est plus souple en son milieu. Dans le cas où la surface extérieure est transversalement convexe, son profil peut être complémentaire de celui des éléments de forme concave qu'il supporte. Les éléments de forme concave sont ainsi emboîtés dans le support et maintenus latéralement alors que les éléments de forme convexe sont encastrés entre les éléments de forme concave.

Dans und mode de réalisation avantageux de l'invention, le siège comporte trois éléments de forme concave destinés à supporter respectivement les épaules de l'utilisateur, ses hanches et les parties inférieures de ses cuisses, maintenues ainsi latéralement. Le siège peut également comporter un élément d'extrémité de forme convexe destiné à supporter les mollets de l'utilisateur ainsi que, à sa partie supérieure, des éléments d'appui latéraux propres à supporter la tête de cet utilisateur en association avec un élément d'extrémité de forme convexe.

Le siège selon l'invention présente une très grande souplesse d'adaptation. Il est possible par exemple de remplacer un élément de forme convexe se trouvant au niveau du dos de l'utilisateur par un élément faisant davantage saillie à l'intérieur du siège de façon que ce dos soit mieux soutenu. Il est également possible de remplacer un élément de forme concave se trouvant au niveau des épaules de l'utilisateur par un autre élément mieux adapté à la largeur de ces épaules. En bref, le siège peut être adapté à la morphologie de l'utilisateur. D'un autre côté, un élément d'appui peut être remplacé par un élément dont le garnissage est de couleur différente ou dont la souplesse est différente.

On a décrit ci-après, à titre d'exemple non limitatif, un mode de réalisation du siège selon l'invention, avec référence aux dessins annexés dans lesquels:

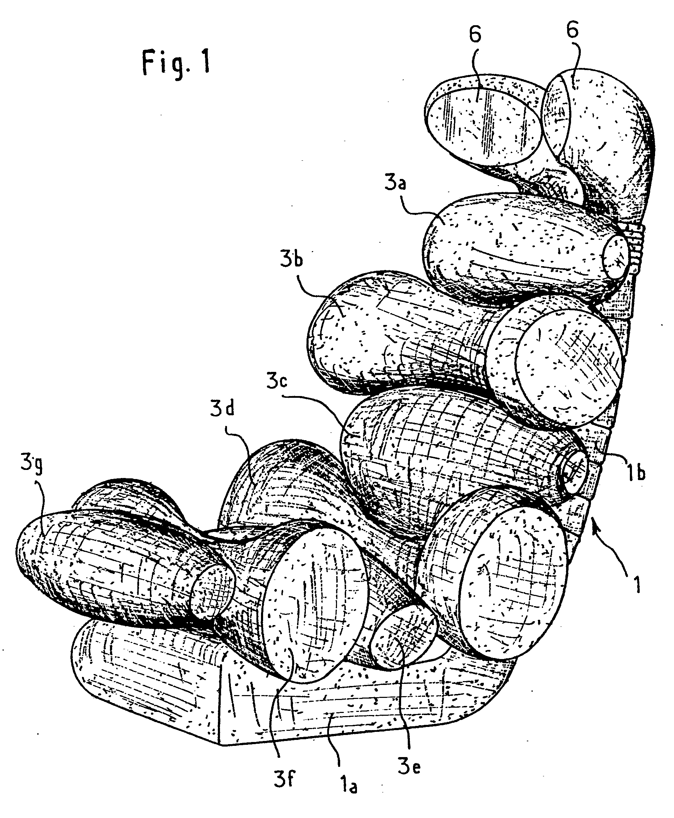

La Figure 1 est une vue en perspective du siège;

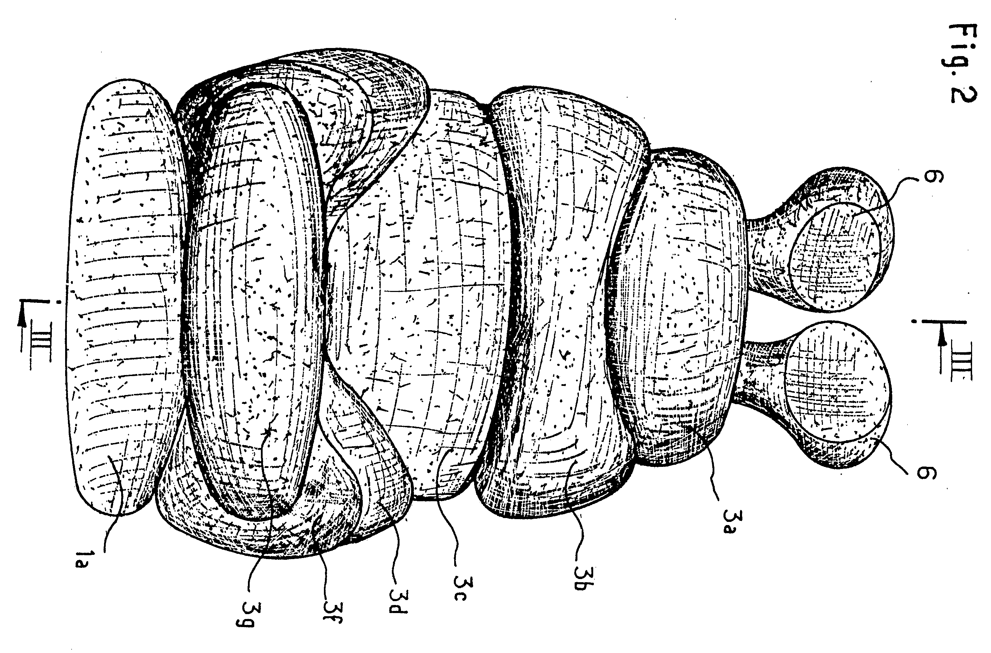

La Figure 2 en est une vue avant;

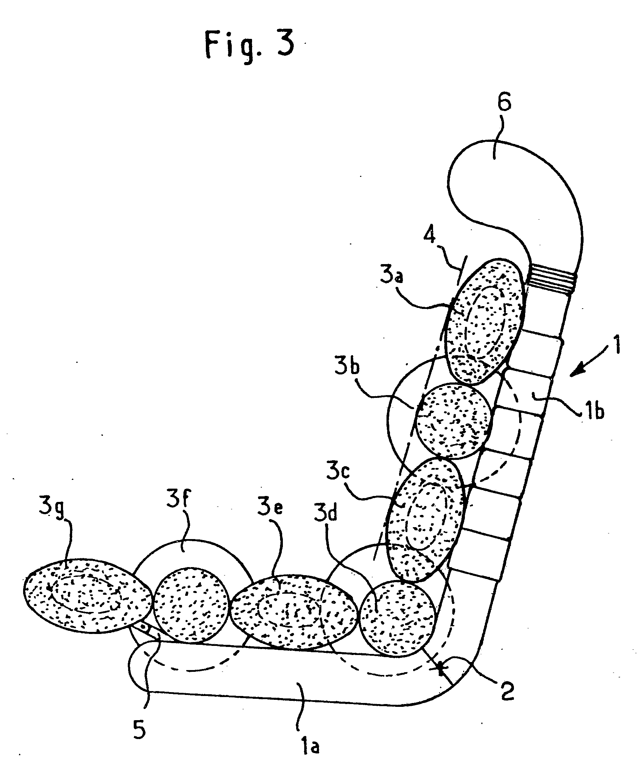

La Figure 3 en est une coupe longitudinale suivant III—III de la figure 2.

Tel qu'il est représenté au dessin, le siège selon l'invention comprend un support 1 qui peut être rigide ou souple. Dans l'exemple représenté, ce support comprend un support d'assise 1a qui est constitué par un cadre rigide enfermant un garnissage en matière souple ou élastique et revêtu d'un tissu décoratif, et un support de dossier 1b qui est monté pivotant en 2 sur le support d'assise 1a et est constitué par un cadre rigide enfermant une série de garnissages en matière souple ou élastique, chacun de ceux-ci étant revêtu de son propre tissu décoratif.

Sur le support 1 sont placés un certain nombre d'éléments d'appui indépendants 3a, 3b, 3c, 3d, 3e, 3f et 3g dont chacun est constitué par un garnissage souple ou élastique, par exemple en morceaux de polystyrène expansé, en crin ou en laine, et est revêtu d'un tissu décoratif. Les éléments peuvent être fixés au support par tout moyen connu, par exemple par des agrafes ou des boutons-pression.

Les éléments 3a, 3c, 3e et 3g sont en forme de tonneau et ont une section ovale alors que les éléments 3b, 3d, 3f, sont en forme de diabolo et approximativement de révolution. Les bords longitudinaux convexes des éléments 3a, 3c, 3e et 3g ont une forme complémentaire de génératrices concaves des éléments 3b, 3d et 3f. La surface extérieure de support 1a et 1b,

dans l'exemple de réalisation représenté, a la forme d'un cylindre convexe dont la directrice a sensiblement le même profil que les bords. Dans ces conditions, les éléments en forme de diabolos reposent sur les supports sur toute leur longueur, suivant une génératrice, ou plus exactement compte tenu de l'aplatissement des éléments, suivant une zone relativement étroite située de part et d'autre de cette génératrice. De leur côté, les éléments en forme de tonneau 3a, 3c et 3e sont coincés entre les éléments en forme de diabolos et reposent en leur milieu sur les supports 1a et 1b. La surface extérieure du support 1 pourrait être également plane.

L'épaisseur maximale des éléments en forme de tonneau est sensiblement égale à l'épaisseur minimale des éléments en forme de diabolos. L'enveloppe 4 des éléments du siège, dans le plan médian longitudinal de celui-ci, est ainsi parallèle à la section longitudinale des supports 1a et 1b et est donc formée de deux tronçons de droite. Le siège présente donc dans sa partie médiane des zones d'appui qui sont sensiblement rectilignes et continues, malgré la conformation inversée des éléments d'appui adjacents. Les éléments en forme de diabolos 3b, 3d et 3f, se trouvent respectivement au niveau des épaules de l'utilisateur, à celui des hanches, et à celui des parties inférieures de ses cuisses. Ces parties du corps sont ainsi maintenues latéralement.

L'élément terminal en forme de tonneau 3g, qui est destiné à supporter les mollets de l'utilisateur, est de préférence fixé à des barrettes 5 qui sont mobiles longitudinalement par rapport au support d'assise 1a, ou articulées sur ce support. Il est ainsi possible d'adapter la position de l'élément 3g à la morphologie de l'utilisateur.

Le support de dossier 1b porte, à sa partie supérieure, deux éléments latéraux 6 qui sont reliés à ce support de manière souple; ils peuvent de ce fait pivoter transversalement et, dans une certaine mesure, se déplacer dans la direction longitudinale dudit support. Le cou et la nuque de l'utilisateur sont ainsi supportés en trois points par les éléments 6 et par l'élément en forme de tonneau 3a.

Il va de soi que la présente invention ne doit pas être considérée comme limitée au mode de réalisation décrit et représenté, mais en couvre, au contraire, toutes les variantes. C'est ainsi, par exemple, qu'on pourrait prévoir des moyens, du type à came, à excentrique, à vis, ou autre, pour déplacer par rapport aux autres, un ou plusieurs éléments d'appui 3a, 3b, 3c, 3d, 3e et 3f.

**Revendications**

1. Siège, notamment pour véhicule, comprenant un support (1) composé d'un support d'assise (1a) et d'un support de dossier auxquels sont liés une série d'éléments d'appui (3a, 3b, 3c, 3d, 3e, 3f, 3g) constitués par des blocs indépendants et juxtaposés, mous, souples ou élastiques, caractérisé en ce que les blocs sont alternativement de forme concave et de forme convexe, ces formes étant déterminées de manière que les bords ou zones par lesquels deux éléments adjacents sont en contact présentent des profils complémentaires.

2. Siège selon la revendication 1, caractérisé en ce que les éléments de forme convexe (3a, 3c, 3e, 3g) ont une section transversale ovale allongée suivant la direction longitudinale du siège.

3. Siège selon la revendication 2, caractérisé en ce que l'épaisseur des éléments de forme convexe (3a, 3c, 3e et 3g), dans les sens correspondant au petit axe de leur section transversale est déterminée de manière que l'élément repose sur le support (1) au moins dans sa partie médiane tout en restant en contact avec les éléments de forme concave (3b, 3d, 3f) adjacents.

4. Siège selon l'une quelconque des revendications précédentes, caractérisé en ce qu'il comporte trois éléments de forme concave (3b, 3d et 3f), destinés à supporter respectivement les épaules de l'utilisateur, ses hanches et les parties inférieures de ses cuisses.

5. Siège selon l'une quelconque des revendications précédentes, caractérise en ce qu'il comporte un élément d'extrémité (3g), de forme convexe destiné à supporter les mollets de l'utilisateur.

6. Siège selon l'une quelconque des revendications précédentes, caractérise en ce qu'il comporte, à sa partie supérieure, des éléments d'appui latéraux (6) propres à supporter la tête de l'utilisateur en association avec un élément d'extrémité (3a) de forme convexe.

**Patentansprüche**

1. Sitz, insbesondere für Kraftfahrzeuge, mit einem Tragrahmen (1), bestehend aus einer Grundplatte (1a) und einer Rücklehne (1b), an denen eine Reihe von Auflageelementen (3a, 3b, 3c, 3d, 3e, 3f, 3g) befestigt und als einzelne und nebeneinanderliegende lockere, schmiegsame oder elastische Teile ausgebildet sind, dadurch gekennzeichnet, daß die Teile abwechselnd eine konkave und eine konvexe Form aufweisen, wobei diese Formen so festgelegt sind, daß die Ränder oder Bereiche, mit denen sich zwei benachbarte Elemente berühren, komplementäre Profile aufweisen.

2. Sitz nach Anspruch 1, dadurch gekennzeichnet, daß die Elemente mit konvexer Form (3a, 3c, 3e, 3g), einen in Längsrichtung des Sitzes länglichen Querschnitt besitzen.

3. Sitz nach Anspruch 2, dadurch gekennzeichnet, daß die Dicke der Element mit konvexer Form (3a, 3c, 3e u. 3g) in der Richtung der kleinen Achse ihres Querschnittes so festgelegt ist, daß das Element auf dem Tragrahmen (1) wenigstens mit seinem Mittelabschnitt aufliegt, wobei es mit den benachbarten Elementen mit konkaver Form (3b, 3d, 3f) vollständig in Kontakt bleibt.

4. Sitz nach einem der vorhergehenden Ansprüche, dadurch gekennzeichnet, daß er drei Elemente mit konkaver Form (3b, 3d und 3f) aufweist, die dazu dienen, jeweils die Schultern des Benutzers, seine Hüften und die unteren Abschnitte seiner Oberschenkel abzustützen.

5. Sitz nach einem der vorhergehenden Ansprüche, dadurch gekennzeichnet, daß er ein am Ende befindliches Element (3g) mit konvexer Form aufweist, das die Waden des Benutzers abstützen soll.

6. Sitz nach einem der vorhergehenden Ansprüche, dadurch gekennzeichnet, daß er am oberen Teil seitliche Stützelemente (6) aufweist, die den Kopf des Benutzers zusammen mit einem äußeren Element (3a) mit konvexer Form abstützen können.

## Claims

1. Seat particularly for a vehicle, comprising a frame (1) consisting of the seat part frame (1a) and a back part frame (1b) to which are connected a series of support elements (3a, 3b, 3c, 3d, 3e, 3f, 3g), constituted by soft, supple or resilient independent and juxtapose blocks, characterised in this that the blocks are alternatively of convex and of concave shape, these shapes being determined in such a manner that the edges or zones by which the two adjacent elements are in contact have complementary profiles.

2. Seat according to claim 1, characterized in this that the elements of convex shape (3a, 3c, 3e, 3g) have an oval elongate, cross-section section considered in the longitudinal direction of the seat.

3. Seat according to claim 2, characterised in this that the thickness of the elements of convex shape (3a, 3c, 3e and 3g) in the sense corresponding to the minor axis of their cross-section section is determined in such a manner that the element rests on the frame (1) at least in the median part while remaining in contact with the adjacent elements of concave shape (3b, 3d, 3f).

4. Seat according to any one of the preceding claims, characterised in this that it comprises three elements of concave shape (3b, 3d and 3f) intended to support respectively the shoulders of the user, his hips and the lower parts of his thighs.

5. Seat according to any one of the preceding claims characterised in this that is comprises an end element (3g) of convex shape intended to support the calves of the user.

6. Seat according to any one of the preceding claims characterised in this that it comprises, at its upper part, lateral support elements (6) intended to support the head of the user in association with an end element (3a) of convex shape.

Fig.1

Fig. 2

# Fig. 3